# EUROPEAN PATENT APPLICATION

(11) **EP 3 702 067 A1**
(43) Date of publication of application: **02.09.2020**
(21) Application number: 19159759.0
(22) Date of filing: 27.02.2019
(51) Int. Cl.: B22F 3/105, B22F 5/12, B33Y 80/00, B33Y 10/00, B23K 35/28, B23K 35/40, B23K 35/02, B23K 35/22, B23K 35/30, B23K 35/32

(54) **METHOD FOR MANUFACTURING A WELDING WIRE**

(71) Applicant: Concept Laser GmbH, 96215 Lichtenfels (DE)
(72) Inventor: Mahr, Jochen, 96215 Lichtenfels (DE)
(74) Representative: Hafner & Kohl PartmbB

(57) **Abstract**

Method for manufacturing a welding wire, the welding wire (10) comprising a welding wire base body (11), comprising manufacturing at least one part of the welding wire base body (11), particularly the complete welding wire base body (11), via at least one additive manufacturing process.

## Description

The invention refers to method for manufacturing a welding wire, the welding wire comprising a welding wire base body.

Respective methods for manufacturing a welding wire, the welding wire comprising a welding wire base body are generally known from prior art.

Typically, conventional methods for manufacturing a welding wire comprise metalworking processes, such as wire drawing, whereby a welding wire raw body having specific dimensions deviating from target dimensions of the welding wire base body is processed, particularly by forming, so as to achieve target dimensions.

Yet, these known methods for manufacturing a welding wire show diverse drawbacks when special materials, such as super alloys, shall be used for manufacturing welding wire. This particularly, applies when specific geometric properties, such as small diameters, shall be achieved.

Indeed, there are approaches for manufacturing a welding wire from respective special materials with desired geometric properties. Yet, these approaches are complex and costly.

Hence, there is a need for providing an improved method for manufacturing a welding wire allowing for manufacturing welding wires from special materials, such as super alloys, with desired geometric properties, such as small diameters.

In view of the foregoing, it is the object of the present invention to provide an improved method for manufacturing a welding wire allowing for manufacturing welding wires from special materials, such as super alloys, with desired geometric properties, such as small diameters.

This object is achieved by the subject-matter of the independent Claims. The Claims depending on the independent Claims relate to possible embodiments of the subject-matters of the independent Claims.

An aspect of the present invention refers to a method for manufacturing a welding wire. The welding wire is built of or comprises a welding wire base body. The welding wire and the welding wire base body, respectively typically have a longitudinal geometric shape. The cross-section of the welding wire and the welding wire base body, respectively can be (rotationally) symmetrical. Yet, other cross-sections of the welding wire and the welding wire base body, respectively, e.g. asymmetrical cross-sections, are conceivable. The welding wire and the welding wire base body, respectively typically comprises a central or symmetrical axis, particularly defined by the geometry of the welding wire and the welding wire base body, respectively.

The welding wire manufactured in accordance with the method described herein is usable or to be used in a welding process, i.e. particularly a metal welding process.

The method comprises manufacturing at least one part of the welding wire base body, particularly the complete welding wire base body, via at least one additive manufacturing process. Hence, the method implements a special manufacturing process, i.e. an additive manufacturing process, for manufacturing at least one portion of a welding wire, particularly a complete welding wire. The implementation of an additive manufacturing process reveals a plurality of advantages with regard to diverse process- and/or welding wire-related parameters, such as processable materials, dimensions, customized properties, etc. Examples of the advantages will be more apparent from the further description of specific exemplary embodiments of the method.

In either case, an improved method for manufacturing a welding wire allowing for manufacturing welding wires from special materials, such as super alloys, with desired geometric properties, such as small diameters, is provided.

According to an exemplary embodiment, at least one additive manufacturing process may be used which comprises additively manufacturing the at least one part of the welding wire base body by means of successive layerwise selective irradiation and consolidation of, particularly powdery, build material layers by means of at least one energy beam, particularly an electron beam or a laser beam, in a build area of an additive manufacturing apparatus, particularly an selective electron beam melting apparatus or selective laser melting apparatus. In other words, the at least one portion of the welding wire base body, particularly the complete welding wire base body, may be additively manufactured by means of successive layerwise selective irradiation and consolidation of, particularly powdery, build material layers by means of at least one energy beam, particularly an electron beam or a laser beam, in a build area of an additive manufacturing apparatus.

Thus, according to an exemplary embodiment, at least one powder-bed based additive manufacturing process is used. In other words, the at least one portion of the welding wire base body, particularly the complete welding wire base body, may be additively manufactured by means of at least one powder-bed based additive manufacturing process. As is clear from the above, a respective additive manufacturing process may be implemented as a selective electron beam melting process or a selective laser melting process. Yet, binder jetting processes, particularly a metal binder jetting processes, are conceivable as well.

According to a further exemplary embodiment, a hybrid additive manufacturing process may be used, in which the at least one welding wire base body is additively build on a raw body. The raw body may have a longitudinal geometric shape. Hence, the welding wire may be built by additively building up the welding wire base body on a raw body. Particularly, the raw body may be provided in horizontally or vertically oriented arrangement and the welding wire base body is additively built on the respective horizontally or vertically oriented raw body. Yet, other orientations of the raw body are conceivable. Generally, the additive build-up of the welding wire base body on the raw body may result in that the raw body is extended in the direction of a central axis of the raw body, which is typically also the central axis of the latter welding wire to be manufactured, which may be deemed or denoted as axial build-up, or the additive build-up of the welding wire base body on the raw body may result in that the raw body is at least partially, particularly completely, extended in a direction transverse to the central axis of the raw body, which is typically also the central axis of the latter welding wire to be manufactured, which may be deemed or denoted as circumferential or radial build-up. Advantages of a respective hybrid additive manufacturing process that due to the combination of different materials or material structures, welding wires with different geometric properties and/or structural properties, i.e. particularly welding properties, can be realized. Specifically, welding wires may be manufactured which may have different geometric properties and/or structural properties, i.e. particularly welding properties, along their central axes which allows for manufacturing customized welding wires.

According to an exemplary embodiment, at least one weldable metal or weldable metal alloy may be used for building the at least one portion of the welding wire base body. A welding wire to be manufactured or manufactured in accordance with the method may thus, be manufactured from at least one weldable metal or metal alloy. The method generally, allows for manufacturing welding wires from all kinds of weldable metals or weldable metal alloy which may be processed in an additive manufacturing process.

According to a more specific exemplary embodiment, at least one weldable metal superalloy may be used for building the at least one portion of the welding wire base body. A welding wire to be manufactured or manufactured in accordance with the method may thus, be manufactured from at least one weldable metal superalloy. Superalloys provide the welding wire with outstanding mechanical and/or thermal properties.

According to a more specific exemplary embodiment, at least one Nickel-based weldable metal or Nickel-based metal alloy may be used for building the at least one portion of the welding wire base body. A welding wire to be manufactured or manufactured in accordance with the method may thus, be manufactured from at least one Nickel-based weldable metal or Nickel-based metal alloy. Such Nickel-based materials have been difficult to process with conventional techniques, yet the use of additive manufacturing process allows for reliable and high-quality manufacturing of welding wires. Particularly, at least one Nickel-based weldable metal or metal alloy containing Carbon, Chromium, Iron, Molybdenum may be used for additively building-up the at least one portion of the welding wire base body. Particularly, at least one Nickel-based weldable metal or metal alloy containing Carbon, Chromium, Iron, Molybdenum, Aluminum, Copper, Niobium, Titanium may be used for additively building-up the at least one portion of the welding wire base body.

According to an even more specific exemplary embodiment, at least one weldable austenitic Nickel-based superalloy may be used for building the at least one portion of the welding wire base body. A welding wire to be manufactured or manufactured in accordance with the method may thus, be manufactured from at least one austenitic Nickel-based superalloy. Such austenitic Nickel-based materials have been very difficult to process with conventional techniques, yet the use of additive manufacturing process allows for reliable and high-quality manufacturing of welding wires. As mentioned above, particularly at least one Nickel-based weldable metal or metal alloy containing Carbon, Chromium, Iron, Molybdenum may be used for additively building-up the at least one portion of the welding wire base body. More particularly, at least one Nickel-based weldable metal or metal alloy containing Carbon, Chromium, Iron, Molybdenum, Aluminum, Copper, Niobium, Titanium may be used for additively building-up the at least one portion of the welding wire base body.

According to a specific exemplary embodiment, a weldable austenitic Nickel-based superalloy may be used for additively building-up the welding wire base body 11 and the welding wire 10, respectively. An example of a respective Nickel-based superalloy may have the following chemical composition: Nickel (plus Cobalt): 50.00 - 55.00 wt. %; Chromium: 17.00 - 21.00 wt. %; Niobium (plus Tantalum): 4.75 - 5.50 wt. %; Molybdenum: 2.80 - 3.30 wt. %; Titanium: 0.65 - 1.15 wt. %; Aluminum: 0.20 - 0.80 wt.%, Cobalt: 1.00 max. wt. %; Carbon: 0.08 max. wt. %; Manganese: 0.35 max. wt. %; Silicon: 0.35 max. wt. %; Phosphorus: 0.015 max. wt. %; Sulfur: 0.015 max. wt.%, Boron: 0.006 max. wt. %, Copper: 0.30 max. wt. %; Iron: balance wt. %. Respective Nickel-based superalloys may be commercially available under the trademark "Inconel", "Inconel 718", or "Inconel 738". A further example of a respective Nickel-based superalloy may have the following chemical composition: Ni 14Cr 9.5Co 5Ti 4Mo 4 W 3AI. A respective Nickel-based superalloy may be commercially available under the trademark "Diamalloy™ 4004NS" or "Rene 41", "Rene 80", or "Rene 95".

According to another specific exemplary embodiment, an iron-based, particularly steel-based, weldable metal or an iron-based, particularly steel-based, metal alloy may be used for building the welding wire base body and welding wire, respectively.

According to another specific exemplary embodiment, an Aluminum-based weldable metal or an Aluminum-based metal alloy may be used for building the welding wire base body and welding wire, respectively.

According to another specific exemplary embodiment, a Magnesium-based weldable metal or a Magnesium-based metal alloy may be used for building the welding wire base body and welding wire, respectively.

According to another specific exemplary embodiment, a Titanium-based weldable metal or a Titanium-based metal alloy may be used for building the welding wire base body and welding wire, respectively.

According to a further exemplary embodiment, at least two different materials, particularly metals or metal alloys, more particularly weldable metals or weldable metal alloys, may be used for building the at least one portion of the welding wire base body. By using at least two different materials, a welding wire with customized structural properties, i.e. particularly welding properties, may be manufactured. Merely as an example, a welding wire having different portions suitable for welding different materials may thus, be realized. Approaches for processing different materials in an additive manufacturing process have been suggested in prior art and can thus, be implemented for performing the method.

According to a specific exemplary embodiment, the welding wire base body may be built with at least one first portion of at least one first material, particularly a first metal or metal alloy, more particularly a first weldable metal or weldable metal alloy, and at least one second portion of at least one second material, particularly a second metal or metal alloy, more particularly a second weldable metal or weldable metal alloy, whereby the first portion at least partially, particularly completely, surrounds the second portion. A welding wire base body manufactured in accordance with an exemplary embodiment of the method may thus, comprise a first portion of a first material, particularly a first metal or metal alloy, more particularly a first weldable metal or weldable metal alloy, and a second portion of a second material, particularly a second metal or metal alloy, more particularly a second weldable metal or weldable metal alloy, whereby the first portion at least partially, particularly completely, surrounds the second portion. The first portion may be built as an outer portion and the second portion may be built as an inner portion. The first portion may be built or serve as a sheath, particularly a protective sheath, surrounding the second portion; in this regard, the first portion may be built from a protective sheath material, such as aluminum or an aluminum alloy, for instance and the second portion may be built from a weldable material, such as a nickel-based alloy, for instance. Other material combinations are conceivable. Further, more than two different materials may be combined in analogous manner.

As is apparent from above, the welding wire base body may be at least partially, particularly completely, built with, particularly gradually changing, different structural properties and/or geometric properties, e.g. cross-sectional shape, diameter, etc., in at least one spatial direction, particularly an axial and/or radial direction with respect to a central axis of the welding wire base body. In other words, the welding wire may be built with at least two sections of different structural properties and/or geometric properties such that a welding wire with customized structural properties, i.e. particularly welding properties, may be manufactured.

According to a further exemplary embodiment, the at least one portion of the welding wire base body, particularly the complete welding wire base body, may be at least partially built with a hollow structure. In other words, the welding wire base body may be at least partially be built with a hollow inner space. The hollow inner space may have a cylindrical cross-section, for example. Yet, other cross-sectional geometries are conceivable. In particular, complex hollow cross-sectional geometries such as comb-structures or the like are conceivable.

According to a further exemplary embodiment, the at least one portion of the welding wire base body, particularly the complete welding wire base body, may be manufactured with a diameter (outer diameter) of 0,75 mm or less, particularly 0,5 mm or less, more particularly 0,4 mm or less, more particularly 0,3 mm or less, more particularly 0,25 mm or less. Hence, relatively thin welding wires and welding wire base bodies, respectively may be manufactured with additive manufacturing processes.

Single, a plurality of or all exemplary embodiments of the method may be arbitrarily combined with each other.

Another aspect of the invention refers to the use of an additive manufacturing process for manufacturing at least one portion of a welding wire base body, particularly a complete welding wire base body, of a welding wire. The annotations regarding the method apply mutatis mutandis to the use of an additive manufacturing process for manufacturing at least one portion of a welding wire base body, particularly a complete welding wire base body, of a welding wire.

Another aspect of the invention refers to an additive manufacturing apparatus for manufacturing a three-dimension object, i.e. particularly a welding wire. The apparatus comprises a hardware- and/or software embodied control unit for controlling functional components of the additive manufacturing apparatus operable during operation of the additive manufacturing apparatus. The control unit is configured to implement the method for manufacturing a welding wire. The annotations regarding the method apply mutatis mutandis to the additive manufacturing apparatus.

The additive manufacturing apparatus is typically, configured for additively manufacturing at least one three-dimensional object by means of successive layerwise selective irradiation and consolidation / solidification of build material layers, i.e. of layers of a build material which can be consolidated by means of being irradiated by at least one energy beam, which build material layers can be consolidated / solidified by means of being irradiated by at least one energy beam in a build area of the apparatus. The build material may be provided as a powder, for instance. The build material may be or comprise a ceramic, a polymer, or a metal, for instance. The energy beam may be an electron beam or a laser beam, for instance. The additive manufacturing apparatus may be implemented as a selective laser sintering apparatus, a selective laser melting apparatus, or a selective electron beam melting apparatus, for instance. Yet, it is also conceivable that the additive manufacturing apparatus is implemented as a binder jetting apparatus, particularly a metal binder jetting apparatus, for instance.

The additive manufacturing apparatus typically, comprises a build area or build plane, respectively. The build area can be defined as the area in which the successive layerwise selective irradiation and consolidation of build material layers can take place or takes place during operation of the additive manufacturing apparatus. The build area is typically disposed in an inertizable or inert process chamber of the additive manufacturing apparatus. The build area typically extends in or parallel to a bottom wall of the process chamber of the additive manufacturing apparatus.

The additive manufacturing apparatus comprises a number of functional devices which are operable during its operation. Each functional device may comprise a number of functional units. Examples of respective functional devices are given below in more detail.

A first exemplary functional device is a build material supply device configured to supply an amount, particularly a specific amount, of build material which is to be applied in the build area of the additive manufacturing apparatus by means of a build material application device. The build material supply device thus, is operable to supply an amount, particularly a specific amount, of build material which is required for forming a build material layer which is to be selectively irradiated and consolidated in the build area during operation of the additive manufacturing apparatus.

A second exemplary functional device is a first build material application device configured to apply an amount, particularly a specific amount, of build material supplied by the build material supply device in the build area of the additive manufacturing apparatus. The build material application device thus, serves for forming build material layers which are to be selectively irradiated and consolidated in the build area during operation of the additive manufacturing apparatus. The build material application device is typically, assigned to the build material supply device and vice versa.

A third exemplary functional device is an irradiation device adapted to successively selectively irradiate and consolidate respective build material layers applied in the build area of the additive manufacturing apparatus with at least one energy beam, e.g. an electron beam or a laser beam. A respective irradiation device may comprise an energy beam generation unit configured to generate at least one energy beam, e.g. a laser beam generating unit or an electron beam generating unit, and/or a beam deflection unit configured to deflect at least one energy beam to diverse positions in the build area, e.g. a scanning unit and/or a deflection coil unit.

Operation of the functional devices of the additive manufacturing apparatus is controllable or controlled by the control unit of the additive manufacturing apparatus.

Another aspect of the invention refers to a computer-readable medium, particularly data carrier, comprising machine-readable instructions. The instructions, when executed by a processor of a control unit of an additive manufacturing apparatus, cause the additive manufacturing apparatus to carry out the method as specified herein. The annotations regarding the method apply mutatis mutandis to the computer-readable medium.

Another aspect of the invention refers to a welding wire, comprising at least one welding wire base body manufactured in accordance with the method specified herein. The annotations regarding the method apply mutatis mutandis to the welding wire.

Exemplary embodiments of the invention are described with reference to the Fig., whereby:
- Fig. 1: shows a principle drawing of an apparatus for additively manufacturing a three-dimensional object according to an exemplary embodiment of the invention; and
- Fig. 2 - 6: each show a principle drawing of a welding wire manufactured in accordance with a method according to an exemplary embodiment of the invention.

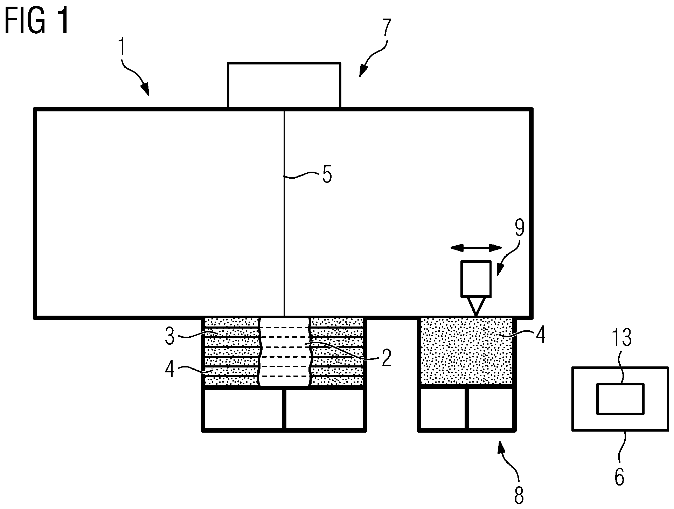

Fig. 1 shows a principle drawing of an exemplary embodiment of an apparatus 1 for additively manufacturing one or more three-dimensional objects 2, e.g. technical components, by means of successive layerwise selective irradiation and accompanying consolidation of build material layers 3 of a build material 4 which can be consolidated by means of at least one energy beam 5 according to an exemplary embodiment. The build material 4 can be a metal powder, for instance. The energy beam 5 can be an electron beam or a laser beam, for instance. The apparatus 1 may be embodied as a selective electron beam melting apparatus or as a selective laser melting apparatus, for instance.

The apparatus 1 comprises a number of functional devices which are operable and operated during operation of the apparatus 1. Each functional device of the apparatus 1 may comprise a number of functional units. Operation of the functional devices and the entire apparatus 1, respectively is controlled by a hardware- and/or software embodied (central) control unit 6 of the apparatus 1.

Exemplary functional devices of the apparatus 1 are an irradiation device 7, a build material supply device 8 (optional), and a build material application device 9. Further functional devices of the apparatus 1 may be provided even though not depicted in the Fig.

The irradiation device 7 is configured to selectively irradiate and thereby, consolidate respective build material layers 3 which have been applied in the build area of the apparatus 1 by means of the build material application device 9 with at least one energy beam 5. The irradiation device 7 may at least comprise a beam generating unit (not shown) configured to generate the at least one energy beam 5. The irradiation device 7 can comprise a beam deflecting unit (not shown), e.g. a scanning unit, configured to deflect the at least one energy beam 5 to diverse positions within the build area of the apparatus 1.

The build material supply device 8 is configured to supply an amount, particularly a specific amount, of build material 4 which is to be applied in the build area of the apparatus 1 by means of the build material application device 9. The build material supply device 8 thus, is operable to supply an amount, particularly a specific amount, of build material 4 which is required for forming a build material layer 3 which is to be selectively irradiated and consolidated in the build area during operation of the apparatus 1. The build material supply device 8 may have other configurations as depicted in Fig. 1.

The build material application device 9 is configured to apply an amount, particularly a specific amount, of build material 4 supplied by the build material supply device 8 in the build area of the apparatus 1. The build material application device 9 thus, serves for forming build material layers 3 which are to be selectively irradiated and consolidated in the build area during operation of the apparatus 1. The build material application device 9 is assigned to the build material supply device 8 and vice versa.

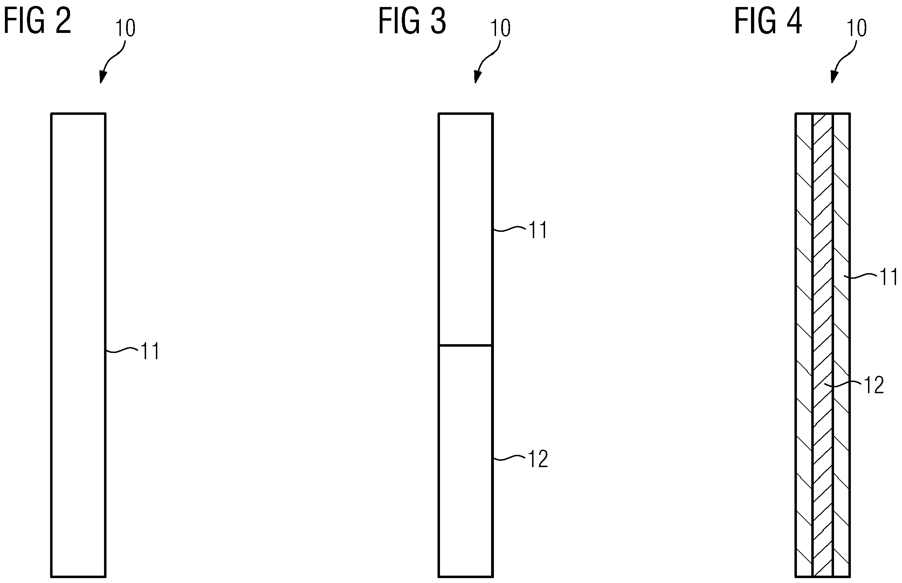

The apparatus 1 is configured to implement a method for additively manufacturing a welding wire 10 (see Fig. 2 - 6).

For implementing the method, the control unit 6 of the apparatus 1 is provided with machine-readable instructions. The instructions, when executed by a processor of the control unit 6 of the apparatus 1, cause the apparatus 1 to carry out the method. Respective instructions may be provided from a computer-readable medium 13, particularly data carrier, comprising respective machine-readable instructions stored thereon.

The method comprises manufacturing at least one part of the welding wire base body 11, particularly the complete welding wire base body 11, via an additive manufacturing process. Hence, the method implements an additive manufacturing process for manufacturing a welding wire 10.

Particularly, an additive manufacturing process which comprises additively manufacturing the at least one part of the welding wire base body 11 by means of successive layerwise selective irradiation and consolidation of, particularly powdery, build material layers 3 by means of at least one energy beam 5, particularly an electron beam or a laser beam, in a build area of the apparatus 1 may be used.

Thus, a powder-bed based additive manufacturing process may be used. In other words, the at least one portion of the welding wire base body 11 may be additively manufactured by means of a powder-bed based additive manufacturing process.

As is clear from the above, a respective additive manufacturing process may be implemented as a selective electron beam melting process or a selective laser melting process, for instance.

As is particularly apparent from Fig. 3, 4, a hybrid additive manufacturing process may be used, in which the welding wire base body 11 is additively build on a raw body 12. The raw body 12 may have a longitudinal geometric shape. Fig. 3, 4 show that the welding wire 10 may be built by additively building up the welding wire base body 11 on a raw body 12. Particularly, the raw body 12 may be provided in horizontally or vertically oriented arrangement and the welding wire base body 11 is additively built on the respective horizontally or vertically oriented raw body 12. Yet, other orientations of the raw body 12 are conceivable. Fig, 3, 4 further show that the additive build-up of the welding wire base body 11 on the raw body 12 may result in that the raw body 12 is extended in the direction of a central axis of the raw body 12, which is typically also the central axis of the latter welding wire 10, which may be deemed or denoted as axial build-up (see Fig. 3), or the additive build-up of the welding wire base body 11 on the raw body 12 may result in that the raw body 12 is at least partially, particularly completely extended in a direction transverse to the central axis of the raw body 12, which is typically also the central axis of the latter welding wire 10, which may be deemed or denoted as circumferential or radial build-up (see Fig. 4 showing a cut-view).

According to the method, at least one weldable metal or weldable metal alloy may be used for building the welding wire base body 11. A welding wire 10 to be manufactured or manufactured in accordance with the method may thus, be manufactured from at least one weldable metal or metal alloy.

According to the method, a Nickel-based weldable metal or Nickel-based metal alloy may be used for building the welding wire base body 11 and welding wire 10, respectively. A welding wire 10 to be manufactured or manufactured in accordance with the method may thus, be manufactured from at least one Nickel-based weldable metal or Nickel- based metal alloy. Particularly, an austenitic Nickel-based superalloy may be used for building the welding wire base body 11 and welding wire 10, respectively. A welding wire 10 to be manufactured or manufactured in accordance with the method may thus, be manufactured from an austenitic Nickel-based superalloy.

A Nickel-based weldable metal or metal alloy containing Carbon, Chromium, Iron, Molybdenum may be used for additively building-up the welding wire base body 11 and the welding wire 10, respectively. Particularly, at least one Nickel-based weldable metal or metal alloy containing Carbon, Chromium, Iron, Molybdenum, Aluminum, Copper, Niobium, Titanium may be used for additively building-up the welding wire base body 11 and the welding wire 10, respectively.

According to a specific exemplary embodiment, a weldable austenitic Nickel-based superalloy may be used for additively building-up the welding wire base body 11 and the welding wire 10, respectively. An example of a respective Nickel-based superalloy may have the following chemical composition: Nickel (plus Cobalt): 50.00 - 55.00 wt. %; Chromium: 17.00 - 21.00 wt. %; Niobium (plus Tantalum): 4.75 - 5.50 wt. %; Molybdenum: 2.80 - 3.30 wt. %; Titanium: 0.65 - 1.15 wt. %; Aluminum: 0.20 - 0.80 wt.%, Cobalt: 1.00 max. wt. %; Carbon: 0.08 max. wt. %; Manganese: 0.35 max. wt. %; Silicon: 0.35 max. wt. %; Phosphorus: 0.015 max. wt. %; Sulfur: 0.015 max. wt.%, Boron: 0.006 max. wt. %, Copper: 0.30 max. wt. %; Iron: balance wt. %. Respective Nickel-based superalloys may be commercially available under the trademark "Inconel", "Inconel 718", or "Inconel 738". A further example of a respective Nickel-based superalloy may have the following chemical composition: Ni 14Cr 9.5Co 5Ti 4Mo 4 W 3AI. A respective Nickel-based superalloy may be commercially available under the trademark "Diamalloy™ 4004NS" or "Rene 41", "Rene 80", or "Rene 95".

According to another specific exemplary embodiment, an iron-based, particularly steel-based, weldable metal or an iron-based, particularly steel-based, metal alloy may be used for building the welding wire base body 11 and welding wire 10, respectively.

According to another specific exemplary embodiment, an Aluminum-based weldable metal or an Aluminum-based metal alloy may be used for building the welding wire base body 11 and welding wire 10, respectively.

According to another specific exemplary embodiment, a Magnesium-based weldable metal or a Magnesium-based metal alloy may be used for building the welding wire base body 11 and welding wire 10, respectively.

According to another specific exemplary embodiment, a Titanium-based weldable metal or a Titanium-based metal alloy may be used for building the welding wire base body 11 and welding wire 10, respectively.

According to a further exemplary embodiment, at least two different materials, particularly metals or metal alloys, more particularly weldable metals or weldable metal alloys, may be used for building the welding wire base body 11 or welding wire 10, respectively. By using two different materials, a welding wire 10 with customized structural properties, i.e. particularly welding properties, may be manufactured. Merely as an example, a welding wire 10 having different portions suitable for welding different materials may thus, be realized. Approaches for processing different materials in an additive manufacturing process have been suggested in prior art and can thus, be implemented for performing the method.

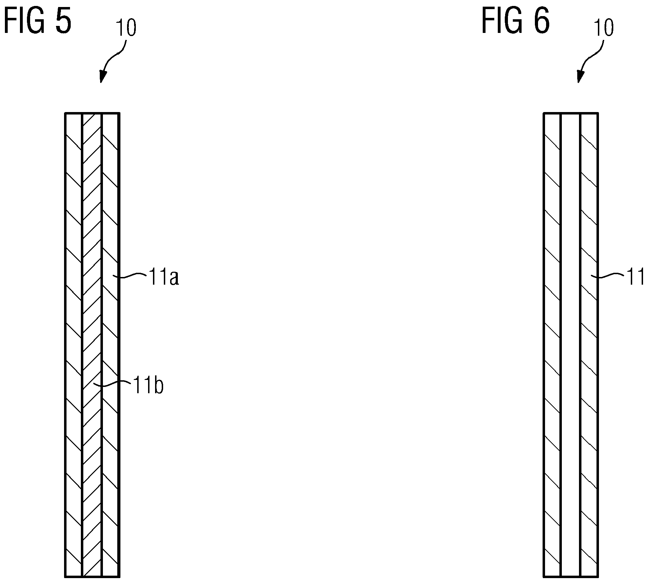

According to a specific exemplary embodiment (see Fig. 5), the welding wire base body 11 may be built with a first portion 11a of a first material, particularly a first metal or metal alloy, more particularly a first weldable metal or weldable metal alloy, and a second portion 11b of a second material, particularly a second metal or metal alloy, more particularly a second weldable metal or weldable metal alloy, whereby the first portion 11a at least partially, particularly completely, surrounds the second portion 11b. A welding wire base body 11 manufactured in accordance with this exemplary embodiment of the method may thus, comprise a first portion 11a of a first material, particularly a first metal or metal alloy, more particularly a first weldable metal or weldable metal alloy, and a second portion 11b of a second material, particularly a second metal or metal alloy, more particularly a second weldable metal or weldable metal alloy, whereby the first portion 11a surrounds the second portion 11b. The first portion 11a may be built as an outer portion and the second portion 11b may be built as an inner portion. The first portion 11a may be built or serve as a sheath, particularly a protective sheath, surrounding the second portion 11b; in this regard, the first portion 11a may be built from a protective sheath material, such as aluminum or an aluminum alloy, for instance and the second portion 11b may be built from a weldable material, such as a nickel-based alloy, for instance.

Generally, the welding wire base body 11 may be built with, particularly gradually changing, different structural properties and/or geometric properties, e.g. cross-sectional shape, diameter, etc., in at least one spatial direction, particularly an axial and/or radial direction with respect to a central axis of the welding wire base body 11 and welding wire 10, respectively.

As is apparent from Fig. 6, the welding wire base body 11 may be built hollow or with a hollow structure 13, respectively. In other words, the welding wire base body 11 may be at least partially be built with a hollow inner space. As depicted in Fig. 6, the hollow inner space may have a cylindrical cross-section. Yet, other cross-sectional geometries are conceivable. In particular, complex hollow cross-sectional geometries such as comb-structures or the like are conceivable.

In all embodiments, the welding wire base body 11 and the welding wire 10, respectively may be manufactured with a diameter (outer diameter) of 0,75 mm or less, particularly 0,5 mm or less, more particularly 0,4 mm or less, more particularly 0,3 mm or less, more particularly 0,25 mm or less.

Single, a plurality, or all features mentioned in context with a specific exemplary embodiment may also apply to other embodiments. Hence, a single, a plurality, or all features mentioned in context with a specific exemplary embodiment may be combined with at least one feature of another specific exemplary embodiment.

## Claims

1. Method for manufacturing a welding wire, the welding wire (10) comprising a welding wire base body (11), **characterized by** manufacturing at least one part of the welding wire base body (11), particularly the complete welding wire base body (11), via at least one additive manufacturing process.

2. Method according to Claim 1, **wherein** at least one additive manufacturing process is used which comprises additively manufacturing the at least one part of the welding wire base body (11) by means of successive layerwise selective irradiation and consolidation of build material layers (3) by means of at least one energy beam (5) in a build area of an additive manufacturing apparatus (1).

3. Method according to Claim 2, **wherein** at least one powder-bed based additive manufacturing process is used.

4. Method according to any of the preceding Claims, **wherein** a hybrid additive manufacturing is used, in which the at least one welding wire base body (11) is additively build on a raw body (12).

5. Method according to any of the preceding Claims, **wherein** at least one weldable metal or metal alloy is used for building the at least one portion of the welding wire base body (11).

6. Method according to Claim 5, **wherein** at least one Nickel- based weldable metal or metal alloy is used for building the at least one portion of the welding wire base body (11).

7. Method according to Claim 6, **wherein** at least one austenitic Nickel-based superalloy is used for building the at least one portion of the welding wire base body (11).

8. Method according to Claim 6 or 7, **wherein** at least one Nickel-based weldable metal or metal alloy containing Carbon, Chromium, Iron, Molybdenum is used for building the at least one portion of the welding wire base body (11).

9. Method according to any of the preceding Claims, **wherein** at least two different materials, particularly metals or metal alloys, more particularly weldable metals or metal alloys, are used for building the at least one portion of the welding wire base body (11).

10. Method according to any of the preceding Claims, **wherein** the at least one portion of the welding wire base body (11) is at least partially built with, particularly gradually changing, different structural properties and/or geometric properties in at least one spatial direction, particularly an axial and/or radial direction with respect to a central axis of the welding wire base body (11).

11. Method according to any of the preceding Claims, **wherein** the at least one portion of the welding wire base body (11), particularly the complete welding wire base body (11), is at least partially built with a hollow structure.

12. Method according to any of the preceding Claims, **wherein** the at least one portion of the welding wire base body (11) is manufactured with a diameter of 0,75 mm or less, particularly 0,5 mm or less, more particularly 0,4 mm or less, more particularly 0,3 mm or less, more particularly 0,25 mm or less.

13. Use of an additive manufacturing process for manufacturing at least one portion of a welding wire base body (11), particularly a complete welding wire base body (11), of a welding wire (10).

14. Apparatus (1) for additively manufacturing a three-dimension object, particularly a welding wire (10), the apparatus (1) comprising a control unit (6) for controlling functional components of the apparatus (1) operable during operation of the apparatus (1), wherein the control unit (6) is configured to implement a method according to any of Claims 1 - 12.

15. Computer-readable medium (13), particularly data carrier, comprising machine-readable instructions, the instructions, when executed by a processor of a control unit (6) of an additive manufacturing apparatus (1), cause the additive manufacturing apparatus (1) to carry out the method of any of Claims 1 - 12.
